(19) Europäisches Patentamt
European Patent Office
Office européen des brevets

(11) **EP 3 469 423 B1**

(12) **EUROPEAN PATENT SPECIFICATION**

(45) Date of publication and mention
of the grant of the patent:
**15.04.2020 Bulletin 2020/16**

(21) Application number: **17734890.1**

(22) Date of filing: **09.06.2017**

(51) Int Cl.:
***G03B 21/20*** (2006.01)

(86) International application number:
**PCT/US2017/036652**

(87) International publication number:
**WO 2017/214464 (14.12.2017 Gazette 2017/50)**

(54) **TARGET ASSEMBLY WITH GLASS-BONDED WAVELENGTH CONVERTER**

ZIELMONTAGE MIT GLASSVERSCHWEISSTEM WELLENLÄNGEN-CONVERTER

ASSEMBLAGE CIBLE AVEC CONVERTISSEUR DE LONGUEUR D'ONDE SOUDE PAR MOYEN
DU VERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.06.2016 US 201662347648 P**

(43) Date of publication of application:
**17.04.2019 Bulletin 2019/16**

(73) Proprietors:
 • **Osram Sylvania Inc.
  Wilmington, MA 01887 (US)**
 • **OSRAM GmbH
  80807 München (DE)**

(72) Inventors:
 • **LENEF, Alan
  Belmont
  MA 02478 (US)**
 • **EBERHARDT, Angela
  86157 Augsburg (DE)**
 • **PESKOLLER, Florian
  85051 Ingolstadt (DE)**
 • **JOHNSTON, David
  Kensington
  MA 03833 (US)**

 • **SORG, Joerg
  93053 Regensburg (DE)**
 • **AVALLON, James
  Beverly
  MA 01915 (US)**
 • **KELSO, John
  Exeter
  NH 03833 (US)**
 • **RAUKAS,Madis
  Lexington
  MA 02421 (US)**
 • **WIRTH-SCHÖN, Joachim
  89312 Günzburg (DE)**
 • **SPRENGER, Dennis
  90552 Röthenbach a.d. Pegnitz (DE)**

(74) Representative: **Viering, Jentschura & Partner
mbB
Patent- und Rechtsanwälte
Am Brauhaus 8
01099 Dresden (DE)**

(56) References cited:
 **WO-A1-2006/097876    WO-A1-2007/063460
 WO-A1-2015/091374    WO-A1-2015/091393
 WO-A1-2015/112946**

**Description**

Technical Field

Embodiments herein generally relate to lighting systems that include a laser-activated remote phosphor light source.

Background

Laser-activated remote phosphor (LARP) approaches are being employed in many applications because they can generate much higher luminance than light emitting diodes (LEDs) and can do so at high power levels. Because of the low etendue of a LARP source, such light sources can also provide highly collimated light from short focal length optics. This implies that LARP sources can be highly compact in principle. However, to achieve this level of compactness, a transmissive LARP configuration is often more desirable than a reflective configuration. This is because pump and projection optics can be arranged in an inline system, devoid of dichroic optics needed to separate pump and emission beams or off-axis optics in the case of direct reflection schemes. This is especially desirable for applications such as automotive forward lighting or miniature projectors where both high luminance and compactness are a premium.

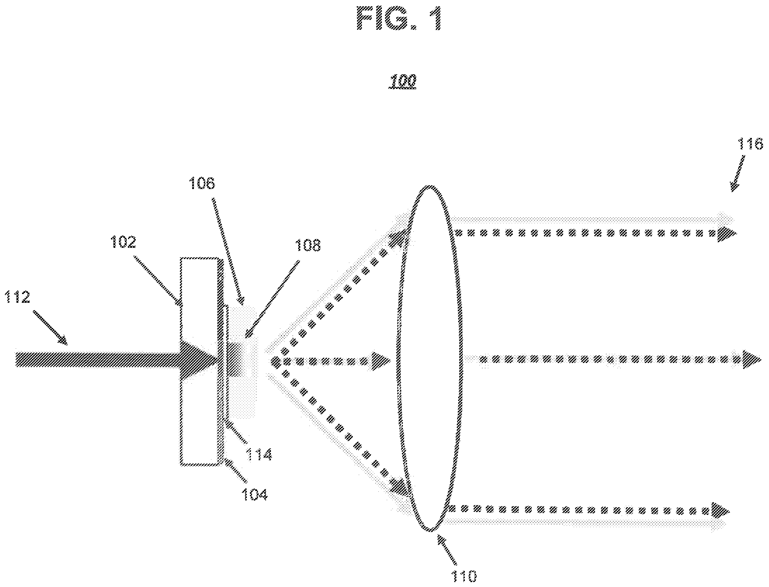

FIG. 1 illustrates an exemplary transmissive LARP system 100. The transmissive LARP system 100 includes a transparent substrate 102 coated with a dichroic 104, a phosphor converter 106 having a luminescent region 108, and secondary optics 110. A focused pump laser beam 112 (or primary pump light), usually generated by one or more blue laser diodes (not shown in FIG. 1 for simplicity), is incident on the phosphor converter 106 which is bonded with a bonding material 114 to the transparent substrate 102. Usually, the transparent substrate 102 is a material of high thermal conductivity. The phosphor converter 106 (also referred to herein more generally as a wavelength converter or alternatively in specific embodiments as a converter target, ceramic converter, or converter) at least partially converts the focused pump laser beam 112 into a secondary light having a longer wavelength (which can be referred to as down conversion). The small luminescent region 108 excited by the focused pump laser beam 112 emits secondary light in both forward directions (towards the secondary optics 110) and backward directions (towards the focused pump laser beam 112). However, only the light in the forward direction is collected by the necessary secondary optics 110 to form a collimated light beam 116. Examples of LARP systems are disclosed in WO 2015/112946 A1.

Brief Description of the Drawings

FIG. 1 illustrates a first transmissive LARP system.

FIG. 2 illustrates a second transmissive LARP system.

FIG. 3 illustrates a LARP system using a low temperature glass according to various embodiments described herein.

FIG. 4 illustrates a bonding interface of a LARP system according to various embodiments described herein.

FIG. 5A illustrates an exemplary interface for describing lateral tensile stress of a low temperature glass.

FIG. 5B illustrates tensile stress of a defect within a low temperature glass.

FIG. 6A illustrates a first cross-sectional image of a bonding interface formed according to various embodiments described herein.

FIG. 6B illustrates a second cross-sectional image of the bonding interface of FIG. 6A.

FIG. 7 illustrates a plot of luminous flux versus incident laser power for four different low temperature glass bonded transmissive LARP samples formed according to various embodiments described herein.

FIG. 8 illustrates a plot of corresponding peak temperatures on an output side of a ceramic phosphor surface versus incident laser power for the four samples depicted in FIG. 7.

FIG. 9 illustrates a plot of color chromaticity coordinates as a function of incident laser power for the four samples depicted in FIG. 7.

FIG. 10 illustrates an intensity image showing a luminance map for one of the samples depicted in FIG. 7.

FIG. 11 illustrates a plot of normalized light output from low temperature glass bonded samples and silicone glue bonded samples under laser shock cycling testing.

Detailed Description

Various embodiments are generally directed to bonding a luminescent material to a thermally conductive substrate using a low temperature glass to provide a wavelength converter system. A dichroic coating is deposited on a thermally conductive substrate. The dichroic coating includes alternating layers of a first material having a first refractive index and a second material having a second refractive index which is greater than the first refractive index. A buffer layer is deposited on the dichroic coating. A wavelength converter is bonded to the buffer layer by a layer of low temperature glass. In some embodiments, the wavelength converter includes a phosphor for converting a primary light from an excitation source into a secondary light. Other embodiments are described and claimed.

A basic problem solved by this invention is finding a method by which a transmissive LARP target can be fabricated which has both high efficiency and high robustness under the severe material stress conditions present in LARP excitation. More particularly, one of the problems solved by the invention is to increase efficiency and prevent large losses from the backward propagating light. This is solved by bonding a free-standing phosphor converter directly to a dichroic coating which passes short wavelength pump light, but efficiently reflects the longer wavelength, backward directed converted secondary light generated by the phosphor. This configuration recycles the backward directed converted secondary light into the forward direction, increasing efficiency. A second important consequence of this configuration is that by placing the dichroic immediately behind the phosphor converter, the redirected light does not expand laterally in the substrate. This greatly reduces lateral expansion of the recycled light, keeping source size small and not compromising the low etendue of the LARP source. Thus, the invention can approach the theoretical conversion efficiency (efficacy) of a phosphor plate converter, while maintaining the low spot size of a forward-only emitting LARP source. Usually ceramic phosphor converters are used in this case, but other free-standing materials like glass phosphor materials are also possible. Such converters include phosphor particles in an inorganic matrix material that are bonded to the substrate/dichroic layers with a low temperature glass (LTG) by the processes described herein.

Unfortunately, the phosphor-dichroic bond can only be practical if the bonding material meets several, often contradictory conditions:

1) The bonding material must be either transparent or translucent, having negligible optical absorption at the pump and secondary wavelengths;

2) The bonding material and process must not damage or negatively impact the performance of the dichroic coating (or converter);

3) The bonding material must be environmentally robust. Depending on applications, this generally requires resistance to humidity;

4) The bonding material must be resistant to high optical intensities and local heating. This typically requires materials to be simultaneously resistant to local phosphor temperatures in excess of 200°C and optical intensities often far exceeding 10 - 100 W/mm$^2$;

5) The complete phosphor target must be resistant to thermal shock (turning the laser on and off) and have sufficient adhesion to maintain bond integrity over the life of the light source; and

6) The bonding material must have sufficient thermal conductivity and able to form sufficiently thin bond lines to provide a substantial thermal path from the phosphor plate to the substrate.

This invention solves these problems, firstly by using a Tellurium (Te) based LTG that has been shown to be stable under an 85°C, 85% relative humidity, 1000 hour humidity test and has a glass softening temperature well below the damage threshold of the dichroic coating. Examples of similar Te-based LTG are described in WO 2015/091374 and WO 2015/091393. However, the glass described therein is easily reduced and can react with a number of materials including oxides commonly used for high-index layers in dielectric coatings. This is avoided in techniques described herein by adding a non-reactive buffer layer such as silica ($SiO_2$) to the bonding side of the dielectric coating. Thirdly, using higher temperature optical thin film materials such as $Ta_2O_5$ and $SiO_2$ helps reduce physical changes to the dichroic coating during bonding as temperatures considerably above the glass softening temperature are used to ensure a thin bond line and good adhesion. More desirable optical thin film materials such as $TiO_2$ can undergo solid-state phase transitions at bonding temperatures which impact design reflectivities and passbands, or may damage the layer stack.

Because of the high power densities ($W/m^3$) of the pump light within the conversion material, heating within the converter material caused by the Stokes shift and non-unity quantum efficiency (QE) can easily produce high operating temperatures which both strongly degrade QE and damage the phosphor material. As a consequence, nearly all LARP conversion systems used for high luminance applications require phosphor converters made of ceramic, quantum dots (QDs), or glass phosphor materials which will be bonded to the substrate. More generally, the bonded high power density LARP converters are usually composed of inorganic materials to resist degradation from the high temperatures and high intensity, short wavelength pump light.

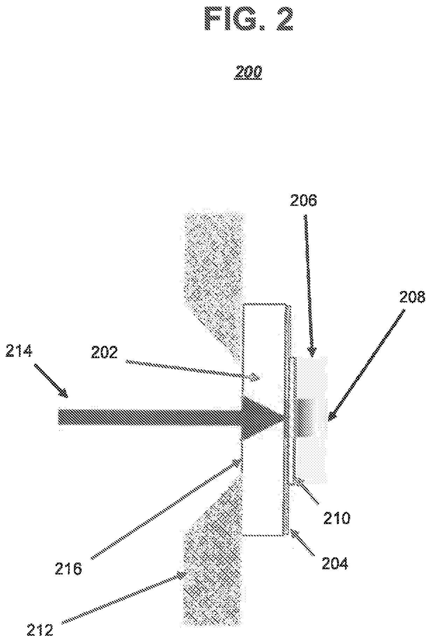

In the current converter target used for automotive applications, wavelength converters in the form of ceramic phosphor platelets are bonded directly to a dichroic. FIG. 2 illustrates an exemplary transmissive LARP system 200. The transmissive LARP system 200 includes a transparent substrate 202 coated with a dichroic 204 and a phosphor converter 206 having a luminescent region 208. The transparent substrate 202 can be bonded to the phosphor converter 206 by a silicone glue bonding layer 210. The transmissive LARP system 200 can further include a heat sink 212. A focused pump laser beam 214 (or pump light) is incident on the phosphor converter 206. The transparent substrate 202 can be a sapphire substrate. The dichroic 204 is coated on the transparent substrate 202 to provide high thermal conductivity while maintaining high optical transparency for lossless pump light propagation. The other side of the transparent substrate 202 is coated with an anti-reflection (AR) coating 216 to reduce Fresnel reflections at the first surface. The phosphor converter 206 is glued to the dichroic 204 using the silicone glue bonding layer 210 that can include either ZnO-filled silicones or unfilled silicones. The silicones themselves must be highly specialized to resist degradation due to heating from the phosphor and intense short wavelength pump light. This limits current automotive LARP transmissive targets to luminances of 200 - 650 $Cd/mm^2$ with luminous fluxes of less than 250 lumens in most cases. Correspondingly, laser pump powers must be limited to roughly 3 W in a 350 - 400 $\mu$m ($4\sigma$) spot size.

**The** invention replaces the organic glue bond (e.g., the silicone glue bonding layer 210), which has been shown to degrade by formation of dark spots in the pump light region, with an inorganic LTG for bonding. This replacement significantly increases the limits to pump intensity and power, thereby increasing maximum achievable luminances and luminous flux, without degradation of the bonding material. Furthermore, this replacement requires no modifications to the footprint of the converter target, maintaining all the advantages of a transmissive LARP configuration (e.g., as shown in FIG. 1 and/or FIG. 2). Because of the high coefficient of thermal expansion (CTE), chemical, and optical properties (e.g., refractive index = 1.9) of the special low temperature glass formulation, additional design changes in the dichroic, converter design criteria, material preparation, and processes were required.

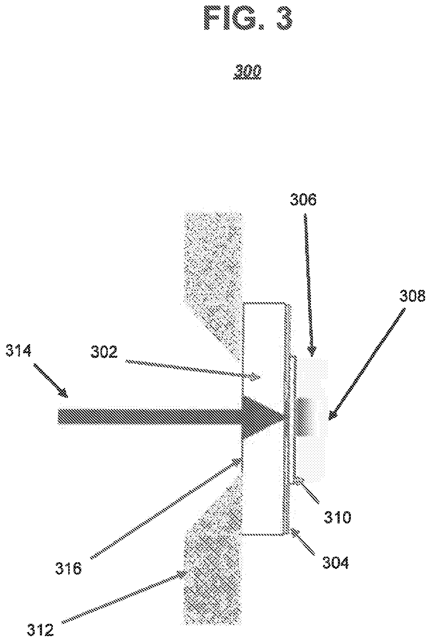

FIG. 3 illustrates an exemplary LARP system 300 according to various embodiments of the present invention. The LARP system 300 can be used in a projection or automotive headlamp module (e.g., such as shown in FIG. 1). As shown in FIG. 3, the LARP system 300 can include a transparent substrate 302 coated with a dichroic 304. The transparent substrate 302 can be bonded to a phosphor converter 306 having a luminescent region 308. The transparent substrate 302 can be bonded to the phosphor converter 306 using a low temperature glass bonding layer 310. The phosphor converter 306 can be coupled or attached to a heat sink 312. The heat sink 312 can be a metal heat sink. A focused pump laser beam 314 (e.g., pump beam or pump light) is incident on the transparent substrate 306 that is coated with an AR coating 316.

Pump light from either a single or a group of high-power laser diodes is collimated and then focused (e.g., to form the focused pump laser beam 314) onto the phosphor converter 306 target. The focused pump laser beam 314 passes through the transparent substrate 302 as shown in FIG. 3. The transparent substrate 302 is a high thermal conductivity substrate such as sapphire which is bonded to the heat sink 312. The bonding of the transparent substrate 302 to the heat sink 312 can be accomplished by a number of methods, including, for example, metal coating on the transparent substrate 302 in the form of a ring which is soldered to the heat sink 312, using high thermal conductivity organic glues, squeezing with spring loaded structures (with thermal grease), and other methods. Because stray light (pump or converted) is not generally wanted within the transparent substrate 302, far from the desired luminescent region 308, light absorbing materials used for the transparent substrate 302-heat sink 312 bonding may even be preferred. On the pump (incident) side of the transparent substrate 302, the AR coating 316 is generally applied to minimize pump beam losses. On the phosphor converter 306 side, the transparent substrate 302 is coated with the dichroic 304 (or dichroic coating) which passes the short wavelength pump beam 314 with very high transmission, while reflecting longer wavelength converted light from the phosphor converter 306 back into the phosphor converter 306 with very high reflectance. The short wavelength passband of the dichroic 304 must also accept pump light from a range of angles with very high transmission, because of the focusing. Because light emission from the phosphor converter 306 is incident on the dichroic 304 from all directions, the dichroic coating 304 must be carefully designed to maximize hemispherical reflectance of converter light. Additionally, as the passbands of multi-layer coatings blue shift with increasing angle of incidence, one would expect higher angle pump light that is backscattered within the phosphor converter 306 would additionally be reflected back into the phosphor converter 306 for additional conversion rather than loss in the direction of the incident pump beam or focused pump laser beam 314. This provides additional efficiency.

Preferably, the phosphor converter 306 is a ceramic phosphor converter which comprises a phosphor such as a cerium-activated garnet phosphor which may be represented by the formula $A_3B_5O_{12}$:Ce, wherein A is Y, Sc, La, Gd, Lu, or Tb and B is Al, Ga or Sc. More preferably, the phosphor is at least one of $Y_3Al_5O_{12}$:Ce, $(Y,Gd)_3Al_5O_{12}$:Ce, and $Lu_3Al_5O_{12}$:Ce, which may be referred to herein as YAG:Ce, GdYAG:Ce, and LuAG:Ce, respectively. In addition, a ceramic phosphor converter may contain additional phases such as $Al_2O_3$, known in the art to change scattering behavior, increase thermal conductivity, or achieve certain adhesion properties with the bonding material. To achieve a wide range of color coordinates or spectral content for the phosphor converter 306, other phosphors including BAM, nitrides, oxy-nitrides, which may be doped with other rare-earths including $Eu^{2+}$, $Pr^{3+}$, $Dy^{3+}$ and others, depending on the desired pump wavelength or wavelength of the focused pump laser beam 314. In a preferred embodiment, a ceramic phosphor converter may be formed by a number of conventional ceramic-forming techniques including mixing the phosphor particles with an organic binder, molding the desired shape, and burning out the organic binder followed a final high-temperature sinter to form a monolithic polycrystalline piece.

In addition, the phosphor converter 306 which will be bonded to the transparent substrate 302 may include single crystal ceramics, or powder phosphor embedded in various inorganic matrix materials such as a low temperature glass, for example, as described in WO 2015/091393. The phosphor converter 306 could also consist of a free-standing thin film phosphor layer which can be made by a variety of methods including pulsed-laser deposition (PLD), sputtering, ion-beam, chemical vapor deposition (CVD), and metalorganic chemical vapor deposition (MOCVD). These methods may also allow use of conversion materials such as GaN, ZnO, and a variety of other semiconductor materials that require an epitaxial film. This may allow excitation in the ultraviolet (UV) and emission in the visible. Additionally, various methods to incorporate quantum dots (QDs) into such inorganic matrix materials could be used. All of these phosphor converters are bonded to the substrate using LTG.

The thickness and scattering properties of the phosphor converter plates used for the phosphor converter 306 are important for LARP applications. In the case of bulk polycrystalline ceramic phosphors, scattering lengths may range from below one micron to on the order of a millimeter or more. Typical scattering lengths, $l_s$, for preferred YAG:Ce ceramic phosphors used in some embodiments described herein are on the order of 1 - 50 $\mu$m with platelet thicknesses between 30 - 500 $\mu$m. More preferably, to restrict radial expansion of the transmitted and converted emission spots, a range of 1 $\mu$m < $l_s$ < 10 $\mu$m with ceramic platelet thickness, t, in the range of 30 $\mu$m < t < 150 $\mu$m are used. This will keep the expansion of the pump and converter light spots on the output side of the phosphor converter 306 to an order of 50 - 200 $\mu$m, with less being commensurate with thinner platelets and smaller scattering lengths. Thinner platelets could also be used. However thinner ceramics are rather fragile and require higher Ce concentrations to achieve the needed absorption. Higher Ce concentrations also tend to increase thermal quenching (loss of QE with increasing temperature).

In typical transmissive LARP applications, luminous fluxes generally exceed far beyond 100 lumens with luminances exceeding 500 Cd/mm$^2$. This exceeds the capability of state-of-the-art projection LEDs. To achieve these specifications, pump powers exceed 1 - 2 W with peak intensities well beyond 10 - 20 W/mm$^2$. Under these conditions, the local temperatures for example in a YAG:Ce ceramic phosphor converter in the pump region easily reach 150°C while maintaining high conversion efficiency and can be driven above 200°C while still maintaining moderate levels of conversion. Exact operating temperature ranges of course depend on the phosphor composition. At such temperatures, especially in the presence of high intensity short wavelength light, nearly all optically transparent (or translucent) organic bonding materials degrade.

The present invention employs a low melting point glass (e.g., the low temperature glass bonding layer 310) to prevent damage to the dichroic coating 304 during bonding. Although most optical thin film materials have high melting points (usually above 1500°C), these materials can exhibit solid-state phase transitions at much lower temperatures; furthermore, even temperatures above 400°C - 600°C have the potential to anneal or densify the polycrystalline (or amorphous) thin film layers, changing their optical properties. For example, $TiO_2$ is normally deposited in the rutile phase for optical applications, but can undergo a phase transition to anatase at around 600°C. Therefore, one of the primary requirements of the glass bonding material are low glass transition and softening temperatures (temperature at which glass flows under its own weight)\. Preferably, the low temperature glass has a glass softening temperature less than 600°C, and more preferably less than 400°C. The upper temperature limit should be no more than 800°C, preferable $\leq$ 700°C, more preferable $\leq$ 650°C, even more preferably $\leq$ 600°C, and most preferably $\leq$ 550°C. Another basic requirement is very low optical absorption within the bond thickness, $T_{LTG}$ (typically < 1 $\mu$m - 10 $\mu$m). Preferably, the low temperature glass bond layer (e.g., the low temperature glass bonding layer 310) should transmit at least 90%, more preferably at least 95%, and even more preferably at least 99% of the primary pump light and/or converted secondary light. The low temperature glass bonding layer 310 must also resist environmental degradation and have low chemical reactivity. Embodiments of the low temperature glass bonding layer 310 (referred to as LTG) are described herein.

The LTGs described in WO 2015/091374 generally have a glass transition temperature, $T_g$, in the range of 200°C - 300°C (exact value depending on glass composition), and therefore remain inert (and solid) at ceramic phosphor temperatures approaching 300°C. These glasses are composed of $TeO_2$ with a molar concentration of at least 65%, and contain one or more oxides of Mg, Ca, Sr, Ba, or Zn, and one or more oxides of Li, Na, or K, with optionally additional minor components as described in WO 2015/091374. The dilatometric softening temperature of these glasses is in the range of 300°C - 400°C. Furthermore, these glasses are highly transmissive from 380 - 800 nm, and are not affected by intense pump light. Therefore, with this Te based glass bonding material, performance of a transmissive LARP target as described herein is limited by the phosphor converter temperatures, not by material limits of the bonding material. These glasses also pass a 1000 hour 85/85 humidity test. In addition, the high refractive index of the glass (n = 1.9) compared to standard methyl silicones used for glue bonding (n = 1.43, typical) implies that the total-internal reflection present with, for example, a YAG (n = 1.83) - glue interface, is not present with the glass bond.

Several additional technical problems had to be solved before using these glasses as modified as described herein to form the low temperature glass bonding layer 310. First, it was found that the glass reacted with dichroic layers with certain desirable dichroic materials, including $Ta_2O_5$, forming large amounts of bubbles. This was solved by employing a silica buffer layer. Preferably, the thickness of the buffer layer is at least 100 nm to prevent interdiffusion of reacting species during bonding. Secondly, $TiO_2$ - $SiO_2$ dichroic reflectors were shown to have low efficacy after bonding. Some physical degradation was observed at 600°C and the $TiO_2$ - $SiO_2$ dichroic underwent spectral reflectance shifts at bonding temperatures. Therefore, a $Ta_2O_5$ - $SiO_2$ layer system was used for the dichroic which showed less spectral alteration from bonding. This dichroic also showed no physical changes at least up to 600°C. However, the lower index of $Ta_2O_5$ compared to $TiO_2$ implied that the dichroic design required more layers and therefore greater thickness to accomplish the same degree of hemispherical reflectance of converted light. This increases thermal resistance of the bond layer to some degree, for fixed reflectivity.

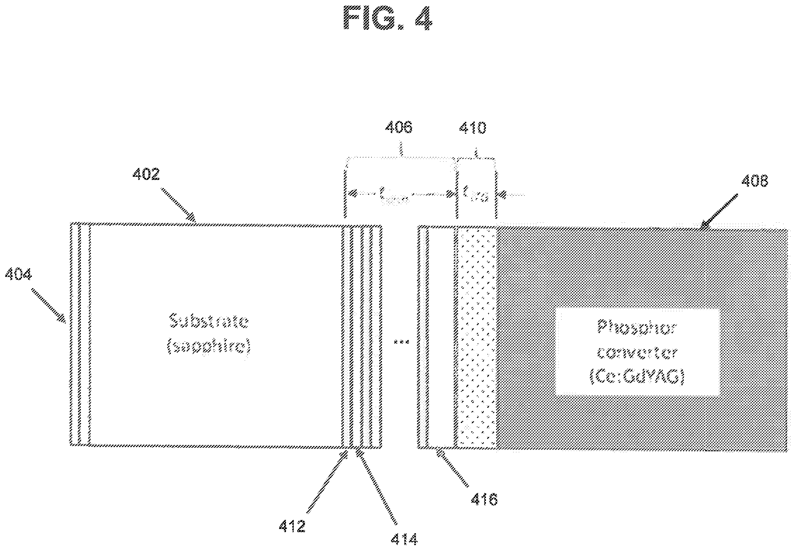

FIG. 4 illustrates an exemplary bonding interface according to some embodiments described herein. The bonding interface illustrated in FIG. 4 can be used in the LARP system 300. As shown in FIG. 4, a transparent substrate 402 includes an AR coating 404 on a first surface (e.g., an entry or incident surface) and a dichroic coating 406 on a second surface (e.g., an exit surface). The transparent substrate 402 can be bonded to a phosphor converter 408 by a LTG 410. The dichroic coating 406 has a thickness, $t_{dich}$, and the LTG has a thickness, $t_{LTG}$, as shown in FIG. 4. The dichroic coating 406 can include layers of a relatively high refractive index material 412 and a relatively low refractive index material 414. FIG. 4 shows the relatively high refractive index material 412 as a first layer on the transparent substrate 402 only as an example. The actual ordering of the relatively high refractive index material 412 and the relatively low refractive index material 414 can be based on a particular application and/or an optimal design for the dichroic coating 406. In some embodiments, the relatively high refractive index material 412 and the relatively low refractive index material 414 can be provided across one or more alternating layers as shown in FIG. 4. Additionally, the dichroic coating 406 is not limited to comprising only two materials. That is, the dichroic coating 406 can comprise any number of materials arranged in any layering sequence. Additional benefits may be achieved by using two or more materials for the dichroic coating 406 arranged, for example, in alternating layers. A buffer layer 416 can be provided adjacent to the LTG 410 as shown. The buffer layer 416 can comprise silica. In some embodiments, the buffer layer 416 is part of the dichroic layer 406. In some embodiments, the transparent substrate 402 can comprise sapphire. In some embodiments, the AR coating 404 can correspond to the AR coating 316, the transparent substrate 402 can correspond to the transparent substrate 302, the dichroic coating 406 can correspond to the dichroic coating 304, the LTG 410 can correspond to the low temperature glass bonding layer 310, and the phosphor converter 408 can correspond to the phosphor converter 408. In various embodiments, the LARP system 300 can include the buffer layer 416. The components depicted in FIG. 4 can form a basis for a glass bond-dichroic-ceramic converter system.

The LTGs described in WO 2015/091374 have high coefficients of thermal expansion (CTE) compared to ceramics such as YAG or sapphire. Typical values of CTE for tellurium-based glasses of the form $R_2O$-$MO$-$TeO_2$, where R = alkali atom, M = Zn, Mg, Ba, (or Pb), range from 15 - 23 $\times$ $10^{-6}$ $K^{-1}$. On the other hand, YAG and alumina/sapphire have CTEs $\approx$ 7 - 8 $\times$ $10^{-6}$ $K^{-1}$, a factor of 2 - 3 lower than the LTG. As a consequence, the LTG layer is pulled under tension by the substrate and ceramic platelet once the glass begins to cool below the transition temperature, $T_g$. This is because the glass is shrinking faster than the materials to which it is bonded. Such a high CTE mismatch would often be a cause for concern as a bonding material and significant cracking would be expected. Therefore, another important aspect of the invention was determining how to bond with these high CTE materials without cracking and subsequent delamination. Because the bonding layer for a LARP target must have the highest heat transfer possible from the laser excited ceramic phosphor converter to the substrate, the glass bond layer must be very thin, typically no more than a few microns. As a positive consequence, use of a very thin LTG bonding layer also greatly improves resistance to cracking. This can be seen by considering some basic elements of fracture theory.

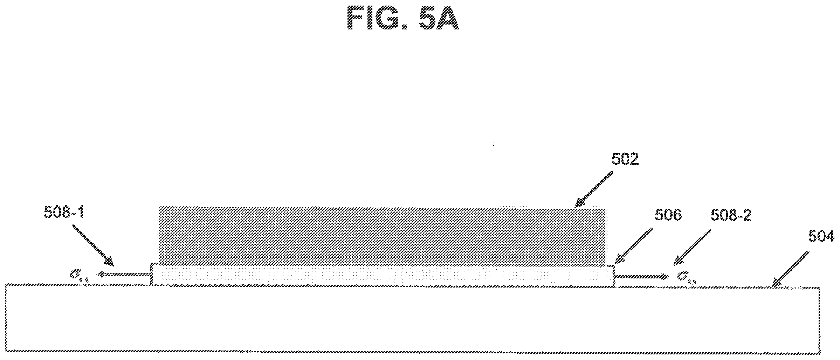

First the lateral tensile stress induced by cooling after bonding is considered. With reference to FIG. 5A, an exemplary interface is shown comprising a ceramic phosphor plate or substrate 502 bonded to a transparent substrate 504 by a LTG 506. The transparent substrate 504 can be a sapphire substrate. Tensile stress, $\sigma_{xx}$, is shown by indicators 508-1 and 508-2. The final tensile stress, $\sigma_{xx}$, experienced by the interface shown in FIG. 5A, when cooled to room temperature, To, can be roughly calculated from the following:

$$\sigma_{xx} \approx -\frac{E}{(1+\nu)(1-2\nu)}(\alpha_g - \alpha_s)(T_g - T_0) \quad , \qquad (1)$$

where E is the Young's modulus of the LTG 506, v is the Poisson ratio of the LTG 506, $\alpha_g$ is the CTE of the LTG 506, and $\alpha_s$ is the CTE of the transparent substrate 504 or the ceramic phosphor plate 502, and $T_g$ is the glass transition temperature of the LTG 506. Equation (1) comes from the standard relation between stress and strain, taking the additional thermal expansion strain into account and assuming the surfaces of the LTG 506 are rigidly fixed to the transparent substrate 504 and the ceramic phosphor plate 502. This is a reasonable approximation as the Young's modulus of many common ceramic phosphors (including YAG) and sapphire are much larger than $TeO_2$ glasses. Typical values of E for $TeO_2$ glasses range from 20 - 70 GPa; Poisson ratios are typically in the range of $v \approx 0.2$ - 0.3. Taking E = 40 GPa, v = 0.25, the CTE for the LTG 506 to be $\alpha g \approx 20 \times 10^{-6}$ K$^{-1}$, $\alpha_s \approx 8 \times 10^{-6}$ K$^{-1}$ for the ceramic phosphor plate 502 and the transparent substrate 504 as sapphire, and assuming a glass transition temperature $T_g \approx 290$ °C, the tensile stress upon cooling is approximately $\sigma_{xx} \approx 270$ MPa.

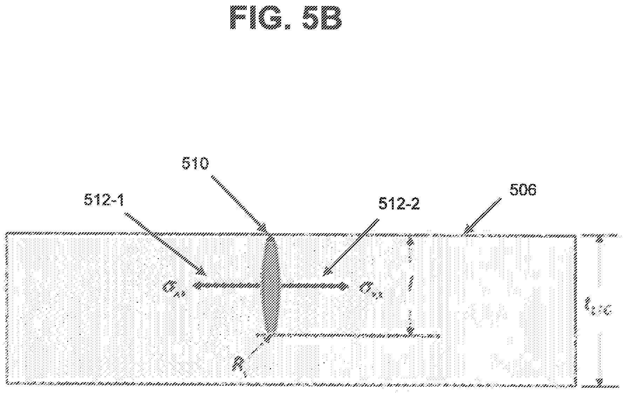

With reference to FIG. 5B, a defect 510 within the LTG 506 is shown. The defect 510 can be a crack or pore for example. As shown in FIG. 5B, the defect 510 is a longitudinal defect with an initial crack of length, l, and a crack tip radius of curvature, $R_c$. Essentially, the length of the initial defect 510 acts as a lever arm, applying torque to the tip of the defect 510. This concentrates the stress at the tip of the defect 510. Tensile stress, $\sigma_{xx}$, is shown by indicators 512-1 and 512-2. The general dependence on the degree of stress concentration can be described by the following:

$$\sigma_{max} = \sigma_{xx}\left(1 + \sqrt{\frac{\ell}{R_c}}\right) \quad , \qquad (2)$$

where $\sigma_{max}$ represent a maximum stress. Equation (2) clearly shows how increasing the length of a defect or crack will induce points of high stress which may break atomic bonds. When bonds begin to break, a crack propagates as its length increases further, and further increases the maximum stress at the crack tip, $\sigma_{max}$. This is the classical description of crack formation in brittle materials, such as from CTE mismatch. More specifically, if the stress, $\sigma_{max}$, concentrated at a defect or initial crack exceeds the theoretical (defect-free) cohesive strength, $\sigma_t$ (Pa), then the stress will begin to break atomic bonds and proceed to propagate. From Equation (2), the stress, $\sigma_{max}$, is limited by both the initial defect length, l, and the radius of curvature, $R_c$. In particular, second law arguments can be made to show that the minimum radius of curvature, $R_m$, of any defect is actually bigger than the average interatomic spacing, a, as shown below:

$$R_m \approx 32a/\pi \quad . \qquad (3)$$

Therefore, there exists a critical initial crack or defect length, $l_{crit,}$ below which the material cohesive strength is not exceeded and the crack or defect will not propagate. Thus, keeping the thickness of the LTG bonding layer, $t_{LTG}$, below this critical length mitigates crack formation during thermal expansion and contraction processes. The condition for this to hold is approximately shown by the following:

$$t_{LTG} < \left(\frac{32}{\pi}\right)\left(\frac{\sigma_t}{\sigma_{xx}}\right)^2 a \quad , \qquad (4)$$

where $\sigma_t$ is the theoretical cohesive strength. The exact criteria depends on the angle of the defect with respect to vertical, but Equation (4) will yield a reasonable estimate.

An estimate of the theoretical cohesive strength, $\sigma_t$, can be made by first estimating the surface energy as follows:

$$\gamma = \frac{1}{4}G_b N_s^{2/3} Z \quad , \tag{5}$$

where $G_b$ is the bond free energy, $N_s$ is the atomic density, and Z is the coordination number. In the case of $TeO_2$ glass, tetrahedral molecular units of Te bonded to 4 O are interconnected via the O vertices, giving Z = 4. The Te-O bond has bond energy $G_b$ = 285 kJ/mol. The mass density is taken as 5000 kg/m³ and the atomic density is the density of Te atoms. Substitution of these values into Equation (5) gives y = 3.20 J/m². This approach gives fairly accurate values for common glasses such as vitreous silica or soda-lime glass. The force that needs to be applied to break the Te-O bonds can be estimated from a Morse potential as follows:

$$\sigma_t = \sqrt{E\gamma/4a} \quad . \tag{6}$$

Substituting the previous values for E and using a ≈ 2Å for the Te-O bond, the theoretical cohesive strength becomes $\sigma_t$ = 12 GPa. Finally, from Equation (4), a preferred condition is given as follows:

$$t_{LTG} < 3.95 \ \mu m \quad . \tag{7}$$

Here the minimum thermodynamically stable radius of curvature is $R_m$ = 20 Å. Therefore, the high CTE mismatch may be mitigated by keeping the LTG bondline thickness to no more than a few microns, preferably less than 10 $\mu$m, more preferably less than 5 $\mu$m, and even more preferably less than 2 $\mu$m. Clearly, the specific glass composition, geometry, types and size of initial defects, and other factors influence the maximum critical bondline thickness. While most LTGs have similar CTE mismatches to substrate and ceramic converter, an LTG CTE of between 8 - 12 ppm would be preferred or matched to substrate and converter CTE to within ± 5ppm.

To achieve robust bonds with these LTGs, solid glass preforms are applied to either the substrate or ceramic. Preforms must be bubble free and free of contaminants which will reduce the LTG, causing darkening, crystallization, or loss of mechanical integrity. They must be heated above the LTG softening point, but not above temperatures at which the dichroic or phosphor converter could be damaged. Other application methods that are known in the art, including application of glass power which is then melted, can be used. However, the same requirements for bubble and contaminant-free must apply. The LTG glass volume should be sufficient to form a bond layer between 0.1 - 10 $\mu$m, preferably, between 0.1 - 2 $\mu$m, while excess glass is allowed to form a small fillet boundary along the rim of the ceramic phosphor plate. Experimentally, an average thickness of 1 - 3 $\mu$m gives robust, crack-free bonds. The fillet does produce stress relief cracks, but they do not extend to the internal bond layer and do not seed additional cracking underneath the ceramic phosphor converter platelet for the reasons given above. If the bond is underfilled, surface tension of the glass will pull a concave boundary, leaving high stress points at the ceramic converter - LTG and substrate - LTG interfaces. The molten glass should be squeezed by the ceramic phosphor and substrate under a fixed pressure to make the appropriate bondline thickness. One can bond using a number of methods and machinery including, but not limited to, precision pick-and-place machinery with heated bondheads and platen (heatplate).

The inventors have found that as-sintered surfaces do not achieve good bonds as large numbers of bubbles form which reduce bond strength, lead to cracking, and have low thermal performance under LARP operation. Typical surface roughness (Ra) should be less than 80 nm, preferably below 25 nm, and more preferably below 15 nm. Thus, it is preferred to polish the bonding surface of the converter platelet through standard grinding and lapping processes.

Through LTG bonding experiments, it was discovered that 2-phase ceramic phosphor converters composed of GdYAG:Ce or YAG:Ce in an $Al_2O_3$ matrix bonded well to a dichroic with a silica buffer layer. The platelets were difficult to shear off, indicating a strong bond. However, similar 1-phase platelets composed entirely of GdYAG:Ce or YAG:Ce did not bond, suggesting that the glass did not wet the ceramic surface well.

Various embodiments of one or more components of the LARP system 300 are described below as will be appreciated by one having ordinary skill in the relevant art.

In various embodiments of the invention, a 2 mm nominal diameter ceramic phosphor (e.g., phosphor substrate, plate, or platelet) with a 2nd phase composition of 32.5% GdYAG:Ce by volume, with the remainder $Al_2O_3$, is bonded to a dichroic coated sapphire substrate. The phosphor has a composition wherein the Ce concentration is a 0.5% molar substitution of Y sites, and Gd is a 10% molar substitution of Y sites; resulting in a general formula of $(Y_{0.895}Gd_{0.10}Ce_{0.005})_3Al_5O_{12}$. The platelet thickness is nominally 70 $\mu$m and sintered in a temperature range of 1550°C - 1650°C for 1 hour. The platelet is polished to an Ra of roughly 4 - 5nm. However, surface roughness Ra's up to 15 - 20 nm were found to bond well.

The substrate consisted of a 0.5 mm thick sapphire substrate with a blue light transmitting AR coating on the incident pump side and a 46 layer dichroic coating consisting of alternating $SiO_2$ and $Ta_2O_5$ layers. The high index $Ta_2O_5$ layer was deposited first on the substrate, with a 140 nm $SiO_2$ buffer layer as the final layer. The layer was optimized to reflect radiation above 500 nm with high reflectivity, while having close to 100% transmission at 450 nm. Mathematically, one optimizes the reflectance for Lambertian radiation emitted from the $YAG/Al_2O_3$ ceramic as follows:

$$R_{avg} = \left\langle 2 \int_0^{\pi/2} d\theta \sin\theta \cos\theta R(\theta,\lambda) \right\rangle , \qquad (8)$$

where the brackets refer to averaging over wavelength, typically weighted by the emission spectrum or over a restricted wavelength range such as 500 - 650 nm. The exact angular and spectral weighting formula may vary for different applications. Preferably, the dichroic coating reflects at least 50%, more preferably at least 75%, and even more preferably at least 85% of the converted secondary light.

The ceramic phosphor converter was bonded to the dichroic buffer layer with a low temperature glass of approximate molar composition: $TeO_2$ (65-70%) - ZnO (15-20%) - $Na_2O$ (10-15%) - $R_2O_3$ (0-3%). This composition has a glass transition temperature of approximately 290°C and a crystallization temperature of 460°C, as determined by differential thermal analysis (DTA) and thermogravimetric (TGA) analysis. Glass preforms were made by pulling a fiber from the glass melt; the fiber was diced to a volume in the range of approximately 5 - 15 $\times$ $10^6$ $\mu m^3$. Preforms were set onto the dichroic which was brought to 490°C at a heating rate of 1°C/sec. The ceramic phosphor converter platelet was held in a vacuum bond head at 400°C and brought in contact with the molten LTG and held under an applied force. The assembly was then cooled at a rate of -1°C/sec, maintaining pressure. In a second setup, bonding temperature (platelet temperature) was 530°C at a faster heating and cooling rate.

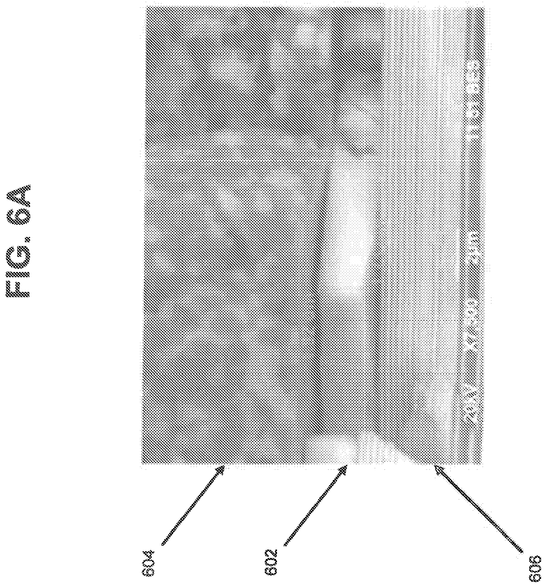

FIG. 6A illustrates a cross-sectional image from a scanning electron microscope (SEM) of a bonding interface formed from the techniques and processes described herein. As shown in FIG. 6A, a LTG layer 602 is positioned between a phosphor converter 604 and a dichroic layer or coating 606. The LTG 602 is sandwiched between the dichroic coating 606 (having a buffer layer as described herein; e.g., the buffer layer 416) and the phosphor converter 604, which is a two-phase ceramic phosphor converter. Typical bondline thickness with the described processes range from < 0.2 - 4 $\mu m$ and provide low thermal resistance between the hot, laser-excited region in the ceramic phosphor converter 604 to the sapphire substrate. As bondline thicknesses increase, the converter temperature will also increase and thereby move the converter's roll-over point (described below) to lower laser powers, limiting the applicability of the transmissive LARP configuration in high luminance applications such as automotive forward lighting.

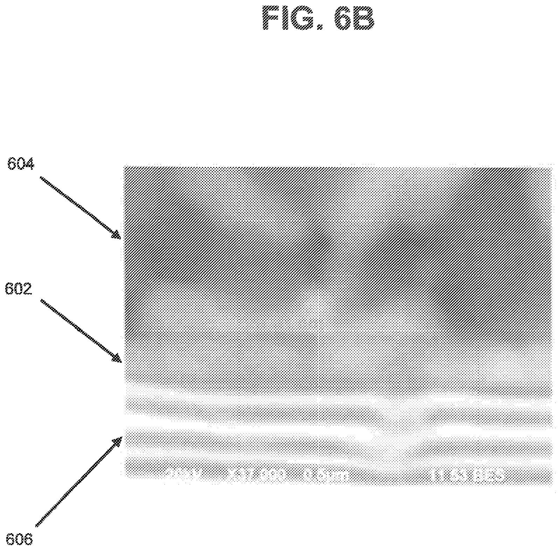

FIG. 6B illustrates a zoomed-in or blown-up version of the cross-sectional image of FIG. 6A.

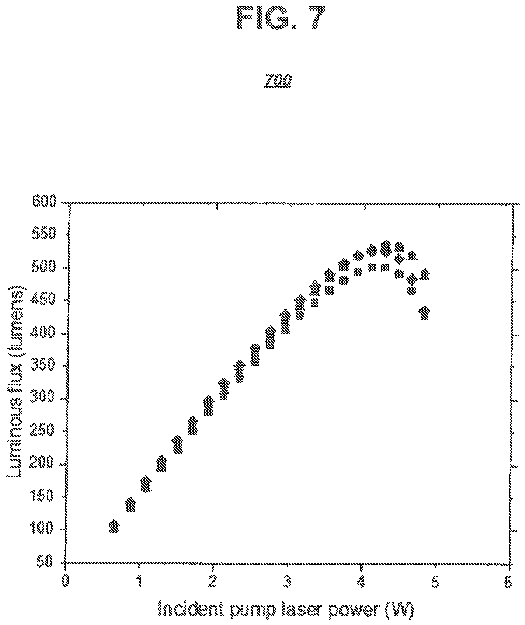

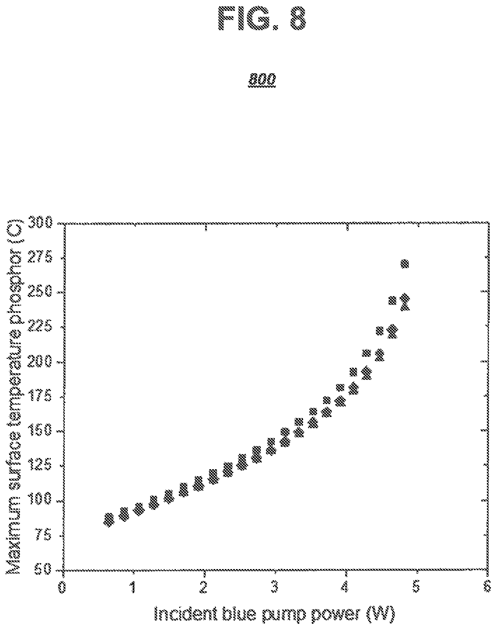

FIG. 7 illustrates a plot 700 of luminous flux versus incident laser power for four samples that use the LTG bonding techniques and processes described herein (pump: 460 $\mu m$ with spot width of $4\sigma$; nominal wavelength = 445 nm). The plot 700 shows photometric data taken on four different glass bonded transmissive LARP samples. The laser power was varied from 0.6 - 4.8 W, with a 4-sigma pump spot size of approximately 460 $\mu m$. The center laser wavelength varied from 443.8 nm - 447.0 nm as the power was increased. The data show that above about 4.3 - 4.5 W, the luminous flux begins to drop. This roll-over condition is well-known in LARP and occurs because local heating from Stokes losses and non-radiative losses (non-unity QE) produce a local temperature rise which further increases losses and heating. If the temperatures approach 220 - 250°C in the case of Ce-garnet phosphors, losses become quite high, strongly degrading QE (thermal quenching) and lead to run-away heating if not adequately dissipated. This can be seen in the rapidly rising temperatures at higher powers shown in FIG. 8 as discussed below.

FIG. 8 illustrates a plot 800 of corresponding peak temperatures on an output side of a ceramic phosphor surface for the samples depicted in FIG. 7 versus incident laser power (pump: 460 $\mu m$ with spot width of $4\sigma$; nominal wavelength = 445 nm). The data shown in the plot 800 also show that the temperatures in LARP operation are safely below the glass transition temperature of the LTG when below the roll-over point.

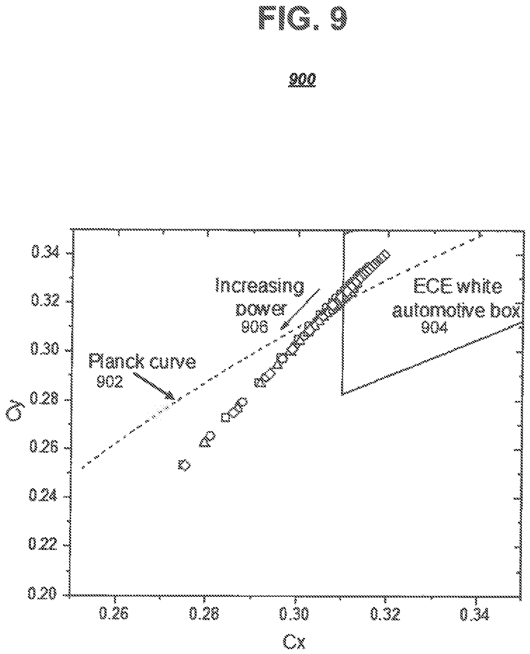

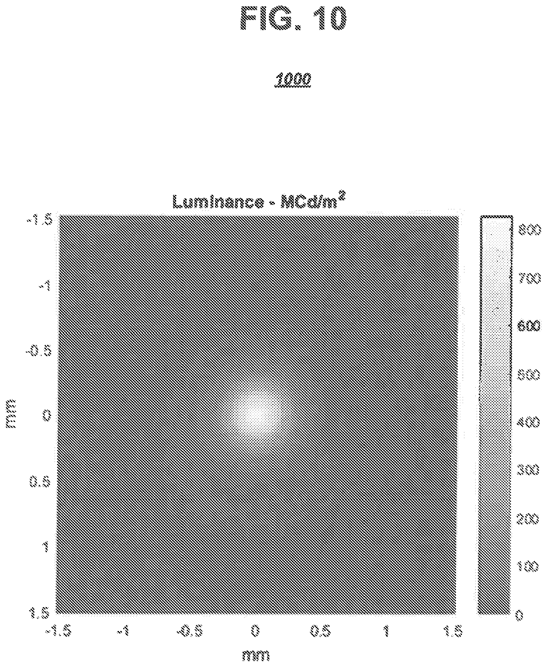

The corresponding 1931 CIE color chromaticity coordinates are given in FIG. 9. Specifically, FIG. 9 illustrates a plot 900 of color chromaticity coordinates, Cy versus Cx, for the samples depicted in FIG. 7 as a function of incident laser power (pump: 460 $\mu m$ with spot width of $4\sigma$; nominal wavelength = 445 nm). The plot 900 shows the Planck curve 902 relative to the United Nations Economic Commission for Europe (ECE) white automotive box 904 and further indicates a relative direction of increasing power with an indicator 906. FIG. 9 shows color points within the ECE box 904 at lower powers. The effect of thermal quenching, combined with decreased blue absorption with increased temperature, decreases the ratio of converted to incident pump light emitted by the samples. This gives the blue shift in Cx. By further optimization of Ce concentration, sintering conditions to control scattering, and thickness, one can generate proper color points, even at the highest laser powers and intensities. FIG. 10 illustrates an intensity image 1000 showing a luminance map of one of the samples of FIG. 7 (laser pump power: 4.28 W). As shown in FIG. 10, peak luminances above 800 Cd/mm$^2$ are achievable with moderate laser pump powers.

One of the key advantages of the LTG bonded transmissive targets as described herein versus silicone bonded LARP targets is that the silicone glue quickly degrades under simultaneous application of laser intensities much greater than 10 W/mm$^2$ and local temperatures at or above 150°C. As can be seen by the temperatures typically reached in FIG. 8, the use of silicones would greatly limit achievable luminous fluxes and luminances to values considerably below the thermal quenching limits of the ceramic phosphor. To show the robustness of the LTG compared to silicone bonds (2 - 3 µm bondline thickness), cycling tests were performed with focused lasers having a 4-sigma spot size of approximately 400 µm and incident powers of 4 - 5.5 W at 450 nm. The exact laser power was adjusted to be well below strong thermal quenching of the phosphor, but near reasonable limits for maximum luminous flux and luminance. Here, 180°C was chosen as the desired peak surface temperature to fix the laser power.

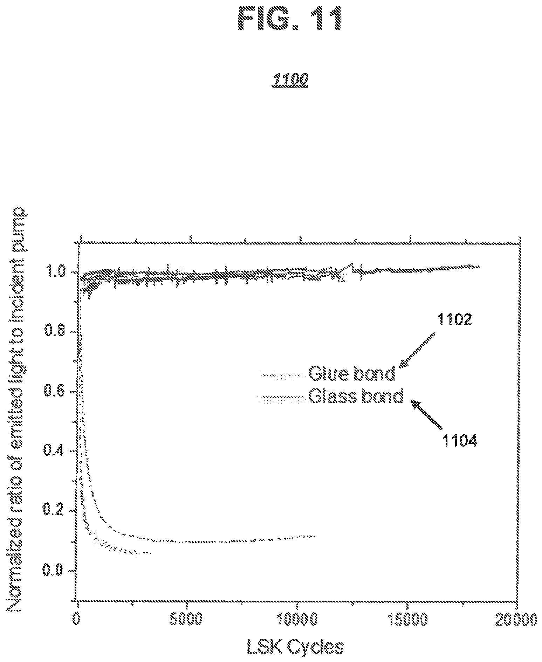

FIG. 11 illustrates a plot 1100 of normalized light output from LTG bonded and silicone glue bonded samples under laser shock cycling. The provided data is from the described cycled laser shock experiment. Dashed lines 1102 show glue bond samples while solid lines 1104 show glass bond samples. For the experiment, the laser was operated with a 30 sec on/30 sec off cycle, using a fast shutter to switch the laser beam. The results clearly show that the glass bond targets exhibit no change with over 15,000 cycles, while all silicone glued samples strongly degrade after less than 1,000 cycles. Examination of the glued samples shows the formation of a darkened region in the silicone at the location of the pump spot. This effect is observed universally in organic glues and usually much worse than shown here without careful choices of silicones. The glass bonded samples did not show any degradation in photometry or physical changes in the glass, except for very minor edge delamination, covering only 1 - 2 % of bond area in this high stress test. These data show the high reliability of the glass bond approach for transmissive LARP compared to standard silicone glued bonded targets.

**To** further establish reliability of the glass bond, accelerated lifetests were performed using passive liquid-liquid thermal shock tests. Here, the goal was to generate failure statistics under conditions significantly exceeding normal operating conditions. These tests were performed by immersing converter targets in Fluorinert with a cycle of 5 min hot/5 min cold soaks (< 5 sec transition time) over a temperature range of -50°C to +150°C. Tests were performed in groups of 25 cycles according to MIL-STD-202H, Method 107. Samples were divided into groups with no visible delamination or defects in glass bond and those with defects or delamination. This was determined by a microscope imaging optical interference method. The results of the test are shown in

(below), demonstrating about a 7% damage rate. It is important to note that the physical damage was minor in most cases, with typically less than 10% delamination area observed primarily on the edges. The damage showed very slow or no propagation in nearly all cases. Statistically significant observed negative changes in photometry were even less frequent, on the order 1 - 2% of test samples. Therefore, these data give very strong positive evidence that the LTG is highly robust. Further tests extending to 1000 - 2000 thermal shock cycles still show similar damage rates. Table 1 is shown below:

**Table 1** - **Results from accelerated passive thermal shock.**

| Sample set | Set size | No. initial defective | No. good showing delam/ damage ≥ 25 cycles | No. defective showing further del am/damage after ≥ 25 cycles | Total no. showing statistically significant drop in luminous flux* | Total no. showing statistically significant drop in luminous flux*, adjusted for sample size |
|---|---|---|---|---|---|---|
| 1 | 18 | 0 | 4 | 0 | 0 | 0 |
| 2 | 16 | 1 | 1 | 0 | 2 | 1 |
| 3 | 23 | 6 | 3 | 2 | 2 | 1 |
| 4 | 22 | 3 | 2 | 1 | 1 | 0 |
| 5 | 24 | 2 | 0 | 1 | 0 | 0 |
| 6 | 25 | 7 | 0 | 4 | 0 | 0 |
| 7 | 39 | 13 | 1 | 1 | 0 | 0 |
| **Totals** | **167** | **32** | **11** | **9** | **5** | **2** |
| **%** | | | **6.6** | **28.1** | **3.0** | **1.1** |
| *at max power of 4.8W, in roll-over condition which is most sensitive to thermal changes | | | | | | |

In various embodiments of the invention, the ceramic phosphor system parameters are extended to provide a wide range of color points (white or more saturated), optimization of efficiency, and to provide a good compromise between angular mixing of pump and converted light as well as spatial mixing. Furthermore, only enough scattering is needed to achieve high extraction efficiency. The actual Ce and Gd concentrations depend on the desired color point (degree of blue transmission and red shift of conversion line due to Gd), sample thickness, and scattering. The ceramic phosphor is sintered in a range of 1500°C - 1800°C for a time of 1 minute to 2 hours. However, these limits depend on specific compositions and fabrication methods. This adjusts the degree of scattering through pore density and to a much lesser extent, grain growth. Adjustment of Ce, scattering, and thickness can be used to optimize luminescent spot size and efficacy, with a trade-off in efficacy for decreased spot size and therefore luminance. Various sintering aids may be used with ceramics to achieve desired levels of scattering or transparency. For typical transmissive LARP applications, where white light is desired, blue transmission is on the order of 5 - 25% of the incident blue pump light, although these values are application dependent. More preferably, sintering temperatures much below 1550°C for the case of YAG:Ce, GdYAG:Ce, and LuAG:Ce lead to open porosity, making ceramic phosphors susceptible to environmental conditions, lowering thermal conductivity, and leading to lower QE in some cases. Temperatures much above 1750°C can lead to highly transparent ceramics, which then require additional scattering surfaces to have high extraction efficiency. These temperatures can also lead to exaggerated grain growth, disrupting the homogeneity of the ceramic. Other phosphors include, but are not limited to, systems including nitrides with $Eu^{2+}$ activators, and other $Ce^{3+}$ host ceramics. Preferably, the ceramic phosphor converters include a large fraction of second phase $Al_2O_3$ for bonding with the $TeO_2$ glasses.

In various embodiments of the invention, the dichroic coating may consist of other high temperature thin film material systems. This may include, but not limited to high refractive index materials such as $Nb_2O_5$, $HfO_2$, and $Sc_2O_3$. Low refractive index optical thin materials include $SiO_2$, $MgF_2$, and $CeF_3$. In general, any of these or other high temperature materials require testing for chemical compatibility, physical changes at bonding temperatures, and spectral changes with temperature. These all depend the specific LTG formulations. Other wavelength regimes may also be included, such as IR or UV pump and converted light. Tests indicate that $SiO_2$-$Ta_2O_5$ dichroics may be usable to slightly above 600°C. Additionally, other dichroic materials could be used, especially high index such as $HfO_2$, but the lower refractive index would require additional dichroic layers to achieve the required reflectivities, thereby decreasing heat transfer to the substrate. Another possibility is $Al_2O_3$ which could be used as a high index layer and combined with $MgF_2$ or other low index material to achieve even higher bonding temperatures without dichroic damage. However, a lower refractive index contrast between thin film layers would imply even thicker dichroics and reduced heat transfer to the substrate. Furthermore, dichroics and/or dichroic coatings used in various embodiments described herein may include more than two appropriate materials to achieve certain desired optical properties such as, for example, reduction of Brewster angle transmission for p-polarized components of the secondary emission.

In various embodiments of the invention, other LTGs may be used, albeit they may involve higher bonding temperatures. Materials need to be optically clear, with CTE < 20 ppm, with CTE < 14 ppm preferred, low viscosity at < 700°C, and that do not crystallize at bonding temperatures, and can pass an 85°C/85% humidity test for 1000 hours. Additionally, materials should be Restriction of Hazardous Substances (RoHS) compliant. Optically clear or translucent glass, having no visible color on the order of tens to hundreds of microns is preferred.

In general, oxide glasses are preferred, including, but not limited to: silicate glasses, borate glasses, borosilicate glasses, phosphate glasses, tellurite glasses and germanate glasses. Also optical glasses and low Tg glasses could be used.

PbO containing glasses are possible, but not preferred. Typical systems are:

$PbO$-$B_2O_3$,
$PbO$-$SiO_2$,
$PbO$-$B_2O_3$-$SiO_2$,
$PbO$-$B_2O_3$-$ZnO_2$,
$PbO$-$B_2O_3$-$Al_2O_3$.

These PbO containing glasses can also contain $Bi_2O_3$ or ZnO; further contained could be, for example, alkaline earth oxides, alkali oxides, $Al_2O_3$, $ZrO_2$, $TiO_2$, $HfO_2$, $Nb_2O_5$, $Ta_2O_5$, $TeO_2$, $WO_3$, $MO_3$, $Sb_2O_3$, $Ag_2O$, $SnO_2$, and rare-earth oxides. Bonding tests were successfully performed with PbO-B2O3-SiO2 glass with a softening temperature in the region of 500°C, Tg in the region of 450°C, a refractive index of ~1.8, and a CTE of (50-400°C) $7.5 \times 10^{-6}$ $K^{-1}$. Thin bonding lines should be possible $\geq$ 600°C with load. This glass passed 1000h 85/85 humidity test.

Some example PbO-free glasses consist of the systems, such as $Bi_2O_3$ containing glassesare:

$Bi_2O_3$-$B_2O_3$,
$Bi_2O_3$-$B_2O_3$-$SiO_2$,
$Bi_2O_3$-$B_2O_3$-$ZnO$,

$Bi_2O_3-B_2O_3-ZnO-SiO_2$.

The $Bi_2O_3$ containing glasses could also contain further glass components - for example, alkaline earth oxides, alkali oxides, $Al_2O_3$, $ZrO_2$, $TiO_2$, $HfO_2$, $Nb_2O_5$, $Ta_2O_5$, $TeO_2$, $WO_3$, $MO_3$, $Sb_2O_3$, $Ag_2O$, $SnO_2$, and rare-earth oxides.

PbO free glass containing ZnO containing glasses are also possible:

$ZnO-B_2O_3$,
$ZnO-B_2O_3-SiO_2$
$ZnO-P_2O_5$
$ZnO-SnO-P_2O_5$
$ZnO-TeO_2$

The ZnO containing glasses could also contain further glass components, for example, alkaline earth oxides, alkali oxides, $Al_2O_3$, $ZrO_2$, $TiO_2$, $HfO_2$, $Nb_2O_5$, $Ta_2O_5$, $TeO_2$, $WO_3$, $MO_3$, $Sb_2O_3$, $Ag_2O$, $SnO_2$, and rare-earth oxides.

These glasses have a softening temperature (viscosity of $10^{7.6}$ dPa-s) preferably in the range of 150-800°C, more preferably 200-700°C, and ideally 250-650°C with a viscosity of $10^5$ dPa-s (flow point) at a very minimum in the temperature range of 150°C to 900°C. More preferably, the upper temperature limit should be no more than 800°C, preferable $\leq$ 700°C, more preferable $\leq$ 650°C, even more preferably $\leq$ 600°C, and most preferably $\leq$ 550°C.

In order to have a high moisture resistance (for example to pass 1000h at 85°C and 85% relative humidity), tellurite glasses are preferred and also borate glasses which contain silica. The silica content of the borate glasses is preferably $\geq$ 1 mol% and $\leq$ 20 mol%, more preferably $\geq$ 3 mol%, and even more preferably $\geq$ 5 mol%. Preferably, these glasses should also contain ZnO and belong to the system, for example $ZnO-B_2O_3-SiO_2$ and $Bi_2O_3-B_2O_3-ZnO-SiO_2$, $ZnO-TeO_2$ works as well. Estimated refractive index of $ZnO-B_2O_3-SiO_2$ is n $\approx$ 1.6, and for $Bi_2O_3-B_2O_3-ZnO-SiO_2$ is n $\approx$ 2.0.

In various embodiments of the invention, an AR coating is applied to the exit side of the ceramic phosphor converter plate to reduce Fresnel reflection coefficients for non-total-internal reflected rays. Ideally, the AR coating again must be made of high temperature optical thin film materials such as $MgF_2$ and may consist of either single or multilayer films. The AR coating may also need to withstand contact with a heated bond head.

In various embodiments of the invention, a low refractive index coating is applied to the bonding side of the ceramic converter or on the bonding side of the dichroic. A typical material would be $MgF_2$ which has a refractive index, n, of 1.38 at 550 nm; however, the chemical reactivity with the LTG would have to be low. By making the layer at least 200 nm, preferably 250 to 500 nm, higher angle light rays emitted by the phosphor will experience total internal reflection (TIR), reflecting off the ceramic converter-$MgF_2$ interface or LTG-$MgF_2$ interface without loss before entering the dichroic. This will greatly reduce the angular range requirements in Equation (8), thereby allowing for higher overall reflectivity of back-directed radiation. This will improve the efficacy or efficiency of the transmissive LARP system. Applying the low refractive index coating to the ceramic phosphor side has some advantages by lowering the flux of high angle light into the LTG layer where light can channel between the scattering ceramic converter and the dichroic coating, spreading the pump and luminescent radiation over a larger, undesired spot size. Some evidence of reactions between $MgF_2$ and the LGT have been observed so a second buffer layer composed of silica, preferably less than 50 nm, more preferably less than 20 nm may be required. This second silica layer would be applied between the LTG and $MgF_2$ coating. Other low index materials, including silica could replace the $MgF_2$ coating, although with less efficacy, as few thermally and mechanically robust materials exist with refractive indices lower than $MgF_2$.

In various embodiments of the invention, the LTGs described are used in a reflective configuration. In order to make high quality LTG bonds, the reflector must have a silica, alumina, or other material to which the $TeO_2$ based glass can wet and bond. Because of the low softening point of these glasses, aluminum or silver mirrors on inexpensive substrates can be used for LARP targets.

In various embodiments of the invention, either transmissive or reflective LARP targets are composed of high transparency ceramic phosphor converters which have strong surface scattering or patterned surfaces to provide light extraction and color mixing.

In various embodiments of the invention, reflective apertures can be placed on the output surface of the ceramic phosphor converter to increase luminance and improve spatial color mixing. Additionally, the converter can consist of co-sintered materials to form apertures or add functionality.

In various embodiments of the invention, other bonded phosphor systems may be considered including QDs which could be embedded in a LTG matrix if chemically compatible which is bonded to a dichroic coated sapphire substrate.

In various embodiments of the invention, LARP systems are described as including phosphor or a phosphor converter but are not so limited. That is, in various embodiments of the invention, other luminescent materials can be used in accordance with the techniques and processes described herein to form a LARP system as will be appreciated by one having ordinary skill in the relevant art. Further, LARP systems described herein are not limited to including sapphire substrates and can include other transparent and/or translucent substrates as will be appreciated by one having ordinary skill in the relevant art.

While the present invention has been disclosed with reference to certain embodiments, numerous modifications, alterations and changes to the described embodiments are possible without departing from the scope of the present invention, as defined in the appended claims. Accordingly, it is intended that the present invention not be limited to the described embodiments, but that it has the full scope defined by the language of the following claims.

**Claims**

1. A target assembly being a transmissive laser-activated remote phosphor target, comprising:

   a dichroic coating (406) deposited on a substrate (402);
   a buffer layer (416) deposited on the dichroic coating (406); and
   a wavelength converter (408) having a bonding surface that is bonded to the buffer layer (416) by a layer of low temperature glass (410), the buffer layer (416) being interposed between the layer of low temperature glass (410) and the dichroic coating (406) acting to prevent a reaction between the layer of low temperature glass (410) and the dichroic coating (406), the layer of low temperature glass (410) extending at least over an entirety of the bonding surface of the wavelength converter(408),
   the wavelength converter (408) comprising a phosphor for converting a primary light from an excitation source into a secondary light and the dichroic coating (406) reflecting at least 50% of the secondary light emitted by the wavelength converter (408).

2. The target assembly of claim 1, wherein the dichroic coating (406) comprises alternating layers of a first material having a first refractive index and a second material having a second refractive index which is greater than the first refractive index, wherein the first material is $SiO_2$ and the second material is $Ta_2O_5$.

3. The target assembly of claim 1, wherein the buffer layer (416) is $SiO_2$, or wherein the buffer layer (416) has a thickness of at least 100 nm.

4. The target assembly of claim 1, wherein the low temperature glass (410) is a Te-based low temperature glass (410), or has a glass softening temperature of less than 600°C, or comprises $TeO_2$ with a molar concentration of at least 65%.

5. The target assembly of claim 1, wherein the low temperature glass (410) further comprises at least one first oxide of Mg, Ca, Sr, Ba, or Zn and at least one second oxide of Li, Na, or K.

6. The target assembly of claim 5, wherein the low temperature glass (410) has a glass transition temperature in a range of 200°C to 300°C.

7. The target assembly of claim 6, wherein the low temperature glass (410) has a softening temperature in a range of 300°C to 400°C.

8. The target assembly of claim 1, wherein a thickness of the layer of low temperature glass (410), $t_{LTG}$, is defined by the equation:

$$t_{LTG} < \left(\frac{32}{\pi}\right)\left(\frac{\sigma_t}{\sigma_{xx}}\right)^2 a$$

   wherein a is an average interatomic spacing of the low temperature glass (410), $\sigma_t$ is a theoretical cohesive strength of the low temperature glass (410), and $\sigma_{xx}$ is a final tensile stress of the low temperature glass (410).

9. The target assembly of claim 1, wherein a fillet of low temperature glass (410) surrounds and protrudes from a periphery of the layer of low temperature glass (410), or wherein the layer of low temperature glass (410) has a thickness of less than 10 $\mu$m, or has a thickness of between 0.1 $\mu$m to 10 $\mu$m.

10. The target assembly of claim 1, wherein the bonding surface has a surface roughness, Ra, of less than 80 nm, or has a surface roughness, Ra, of less than 25 nm, or has a surface roughness, Ra, of less than 15 nm.

11. The target assembly of claim 1, wherein the wavelength converter (408) comprises at least two phases, the first phase comprising the phosphor and the second phase comprising $Al_2O_3$, or wherein the wavelength converter (408) comprises quantum dots, QDs.

12. The target assembly of claim 1, wherein the phosphor is a cerium-activated garnet phosphor having a formula $A_3B_5O_{12}$:Ce, wherein A is Y, Sc, La, Gd, Lu, or Tb and B is Al, Ga, or Sc.

13. The target assembly of claim 2, wherein the first material is selected from $SiO_2$, $MgF_2$, and $CeF_3$, or wherein the second material is selected from $Ta_2O_5$, $Nb_2O_5$, $HfO_2$, $Sc_2O_3$ and $Al_2O_3$.

14. The target assembly of claim 1, wherein the low temperature glass (410) has a coefficient of thermal expansion of less than 25 ppm, or wherein the layer of low temperature glass (410) transmits more than 90% of at least one of the primary or secondary light.

15. The target assembly of claim 1, wherein an exit surface of the wavelength converter (408) comprises an anti-reflective coating (404), or a patterned surface.

**Patentansprüche**

1. Target-Anordnung, die ein durchlässiges laseraktiviertes entferntes Leuchtstoff-Target ist, aufweisend:

eine dichroitische Beschichtung (406), die auf einem Substrat (402) abgeschieden ist;
eine Pufferschicht (416), die auf der dichroitischen Beschichtung (406) abgeschieden ist; und
einen Wellenlängenkonverter (408) mit einer Verbindungsoberfläche, die mittels einer Schicht aus Niedertemperaturglas (410) mit der Pufferschicht (416) verbunden ist,
wobei die zwischen der Schicht aus Niedertemperaturglas (410) und der dichroitischen Beschichtung (406) angeordnete Pufferschicht (416) eine Reaktion zwischen der Schicht aus Niedertemperaturglas (410) und der dichroitischen Beschichtung (406) verhindert, wobei sich die Schicht aus Niedertemperaturglas (410) zumindest über eine Gesamtheit der Verbindungsoberfläche des Wellenlängenkonverters (408) erstreckt,
wobei der Wellenlängenkonverter (408) einen Leuchtstoff zum Konvertieren eines primären Lichts von einer Anregungsquelle in ein sekundäres Licht umfasst und die dichroitische Beschichtung (406) mindestens 50% des mittels des Wellenlängenkonverters (408) emittierten sekundären Lichts reflektiert.

2. Target-Anordnung nach Anspruch 1, wobei die dichroitische Beschichtung (406) alternierende Schichten aus einem ersten Material mit einem ersten Brechungsindex und einem zweiten Material mit einem zweiten Brechungsindex, der größer als der erste Brechungsindex ist, aufweist, wobei das erste Material $SiO_2$ ist und das zweite Material $Ta_2O_5$ ist.

3. Target-Anordnung nach Anspruch 1, wobei die Pufferschicht (416) $SiO_2$ ist oder wobei die Pufferschicht (416) eine Dicke von mindestens 100 nm aufweist.

4. Target-Anordnung nach Anspruch 1, wobei das Niedertemperaturglas (410) ein Niedertemperaturglas (410) auf Te-Basis ist oder eine Glaserweichungstemperatur von weniger als 600 °C aufweist oder $TeO_2$ mit einer molaren Konzentration von mindestens 65% aufweist.

5. Target-Anordnung nach Anspruch 1, wobei das Niedertemperaturglas (410) ferner mindestens ein erstes Oxid von Mg, Ca, Sr, Ba oder Zn und mindestens ein zweites Oxid von Li, Na oder K aufweist.

6. Target-Anordnung nach Anspruch 5, wobei das Niedertemperaturglas (410) eine Glasübergangstemperatur in einem Bereich von 200 °C bis 300 °C aufweist.

7. Target-Anordnung nach Anspruch 6, wobei das Niedertemperaturglas (410) eine Erweichungstemperatur in einem Bereich von 300 °C bis 400 °C aufweist.

**8.** Target-Anordnung nach Anspruch 1, wobei eine Dicke der Schicht aus Niedertemperaturglas (410), $t_{LTG}$, durch die Gleichung definiert ist:

$$t_{LTG} < \left(\frac{32}{\pi}\right)\left(\frac{\sigma_t}{\sigma_{xx}}\right)^2 a$$

wobei a ein durchschnittlicher Atomabstand des Niedertemperaturglases (410) ist, $\sigma_t$ eine theoretische Kohäsionsfestigkeit des Niedertemperaturglases (410) ist und $\sigma_{xx}$ eine Zugfestigkeit des Niedertemperaturglases (410) ist.

**9.** Target-Anordnung nach Anspruch 1, wobei eine Leiste aus Niedertemperaturglas (410) einen Umfang der Niedertemperaturglasschicht (410) umgibt und von diesem vorsteht, oder wobei die Niedertemperaturglasschicht (410) eine Dicke aufweist von weniger als 10 $\mu$m oder eine Dicke zwischen 0,1 $\mu$m und 10 $\mu$m hat.

**10.** Target-Anordnung nach Anspruch 1, wobei die Verbindungsoberfläche eine Oberflächenrauheit Ra von weniger als 80 nm oder eine Oberflächenrauheit Ra von weniger als 25 nm oder eine Oberflächenrauheit Ra von weniger als 15 nm aufweist.

**11.** Target-Anordnung nach Anspruch 1, wobei der Wellenlängenkonverter (408) mindestens zwei Phasen umfasst, wobei die erste Phase den Leuchtstoff und die zweite Phase $Al_2O_3$ umfasst, oder wobei der Wellenlängenkonverter (408) Quantenpunkte (QDs) umfasst.

**12.** Target-Anordnung nach Anspruch 1, wobei der Leuchtstoff ein Cer-aktivierter Granat-Leuchtstoff mit der Formel $A_3B_5O_{12}$:Ce ist, wobei A Y, Sc, La, Gd, Lu oder Tb ist und B Al, Ga oder Sc ist.

**13.** Target-Anordnung nach Anspruch 2, wobei das erste Material aus $SiO_2$, $MgF_2$ und $CeF_3$ ausgewählt ist oder wobei das zweite Material aus $Ta_2O_5$, $Nb_2O_5$, $HfO_2$, $Sc_2O_3$ und $Al_2O_3$ ausgewählt ist.

**14.** Target-Anordnung nach Anspruch 1, wobei das Niedertemperaturglas (410) einen Wärmeausdehnungskoeffizienten von weniger als 25 ppm aufweist, oder wobei das Niedertemperaturglas (410) mehr als 90% von mindestens einem von dem primären oder sekundären Licht durchlässt.

**15.** Target-Anordnung nach Anspruch 1, wobei eine Austrittsfläche des Wellenlängenkonverters (408) eine Antireflexionsbeschichtung (404) oder eine strukturierte Oberfläche aufweist.

## Revendications

**1.** Ensemble cible qui est une cible de luminophore à distance activé par laser transmissive, comprenant :

un revêtement dichroïque (406) déposé sur un substrat (402) ;
une couche tampon (416) déposée sur le revêtement dichroïque (406) ; et
un convertisseur de longueur d'onde (408) ayant une surface de liaison qui est liée à la couche tampon (416) par une couche de verre basse température (410), la couche tampon (416) étant intercalée entre la couche de verre basse température (410) et le revêtement dichroïque (406) agissant pour empêcher une réaction entre la couche de verre basse température (410) et le revêtement dichroïque (406), la couche de verre basse température (410) s'étendant au moins sur une totalité de la surface de liaison du convertisseur de longueur d'onde (408),
le convertisseur de longueur d'onde (408) comprenant un luminophore pour transformer une lumière primaire provenant d'une source d'excitation en une lumière secondaire et le revêtement dichroïque (406) réfléchissant au moins 50 % de la lumière secondaire émise par le convertisseur de longueur d'onde (408).

**2.** Ensemble cible de la revendication 1, dans lequel le revêtement dichroïque (406) comprend des couches alternées d'un premier matériau ayant un premier indice de réfraction et d'un deuxième matériau ayant un deuxième indice de réfraction qui est supérieur au premier indice de réfraction, le premier matériau étant du $SiO_2$ et le deuxième matériau étant du $Ta_2O_5$.

3. Ensemble cible de la revendication 1, dans lequel la couche tampon (416) est du $SiO_2$, ou dans lequel la couche tampon (416) a une épaisseur d'au moins 100 nm.

4. Ensemble cible de la revendication 1, dans lequel le verre basse température (410) est un verre basse température à base de Te (410), ou a une température de ramollissement du verre de moins de 600 °C, ou comprend du $TeO_2$ avec une concentration molaire d'au moins 65 %.

5. Ensemble cible de la revendication 1, dans lequel le verre basse température (410) comprend en outre au moins un premier oxyde de Mg, Ca, Sr, Ba ou Zn, et au moins un deuxième oxyde de Li, Na ou K.

6. Ensemble cible de la revendication 5, dans lequel le verre basse température (410) a une température de transition vitreuse dans une gamme de 200 °C à 300 °C.

7. Ensemble cible de la revendication 6, dans lequel le verre basse température (410) a une température de ramollissement dans une gamme de 300 °C à 400 °C.

8. Ensemble cible de la revendication 1, dans lequel une épaisseur de la couche de verre basse température (410), $t_{LTG}$, est définie par l'équation :

$$t_{LTG} < \left(\frac{32}{\pi}\right)\left(\frac{\sigma_t}{\sigma_{xx}}\right)^2 a$$

dans laquelle $a$ est un espacement interatomique moyen du verre basse température (410), $\sigma_t$ est une force de cohésion théorique du verre basse température (410), et $\sigma_{xx}$ est une contrainte de traction finale du verre basse température (410).

9. Ensemble cible de la revendication 1, dans lequel un congé de verre basse température (410) entoure et fait saillie depuis une périphérie de la couche de verre basse température (410), ou dans lequel la couche de verre basse température (410) a une épaisseur de moins de 10 $\mu$m, ou a une épaisseur comprise entre 0,1 $\mu$m et 10 $\mu$m.

10. Ensemble cible de la revendication 1, dans lequel la surface de liaison a une rugosité de surface, Ra, de moins de 80 nm, ou a une rugosité de surface, Ra, de moins de 25 nm, ou a une rugosité de surface, Ra, de moins de 15 nm.

11. Ensemble cible de la revendication 1, dans lequel le convertisseur de longueur d'onde (408) comprend au moins deux phases, la première phase comprenant le luminophore et la deuxième phase comprenant de l'$Al_2O_3$, ou dans lequel le convertisseur de longueur d'onde (408) comprend des boîtes quantiques, QD.

12. Ensemble cible de la revendication 1, dans lequel le luminophore est un luminophore au grenat activé par le cérium ayant une formule $A_3B_5O_{12}$:Ce, dans laquelle A est Y, Sc, La, Gd, Lu ou Tb, et B est Al, Ga ou Sc.

13. Ensemble cible de la revendication 2, dans lequel le premier matériau est choisi parmi $SiO_2$, $MgF_2$ et $CeF_3$, ou dans lequel le deuxième matériau est choisi parmi $Ta_2O_5$, $Nb_2O_5$, $HfO_2$, $Sc_2O_3$ et $Al_2O_3$.

14. Ensemble cible de la revendication 1, dans lequel le verre basse température (410) a un coefficient de dilatation thermique de moins de 25 ppm, ou dans lequel la couche de verre basse température (410) transmet plus de 90 % de la lumière primaire et/ou secondaire.

15. Ensemble cible de la revendication 1, dans lequel une surface de sortie du convertisseur de longueur d'onde (408) comprend un revêtement antireflet (404), ou une surface à motif.

EP 3 469 423 B1

## FIG. 1

*100*

# FIG. 2

200

# FIG. 3

300

**FIG. 4**

FIG. 5A

EP 3 469 423 B1

FIG. 5B

# FIG. 6A

604

602

606

EP 3 469 423 B1

EP 3 469 423 B1

# FIG. 6B

604

602

606

# FIG. 7

_700_

## FIG. 8

*800*

# FIG. 9

## 900

# FIG. 10

_1000_

# FIG. 11

_1100_

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015112946 A1
- WO 2015091374 A
- WO 2015091393 A